# EUROPEAN PATENT APPLICATION

(11) **EP 2 157 399 A1**
(43) Date of publication of application: **24.02.2010**
(21) Application number: 08765513.0
(22) Date of filing: 12.06.2008
(51) Int. Cl.: F42B 3/12, B01J 7/00, B60R 21/26, B60R 22/46

(54) **SQUIB, GAS GENERATION DEVICE FOR AIRBAG, AND GAS GENERATION DEVICE FOR SEATBELT PRETENSIONER**

(30) Priority: 13.06.2007 JP 2007156630
(71) Applicant: Nippon Kayaku Kabushiki Kaisha, Tokyo 102-8172 (JP)
(72) Inventor: NAKAMURA, Koji, Himeji-shi Hyogo 679-2123 (JP); TSUKAMOTO, Takatoshi, Himeji-shi Hyogo 679-2123 (JP); MAEDA, Shigeru, Himeji-shi Hyogo 679-2123 (JP); MUKUNOKI, Hirotaka, Himeji-shi Hyogo 679-2123 (JP); KOIKE, Hideyuki, Himeji-shi Hyogo 679-2123 (JP)
(74) Representative: Ilgart, Jean-Christophe
(86) International application number: PCT/JP2008/060769
(87) International publication number: WO 2008/153097

(57) **Abstract**

A squib comprising a cup body, a cup body cover, and a header for holding a plurality of electrode pins insulated from one another and closing the opening portion of the cup body, wherein the internal of the cup body has an ignition powder, and a heating element connected to the electrode pins for igniting the ignition powder by externally applying electric current arranged in contact with the ignition powder, wherein a metal cylindrical or ring restraining member is provided in the outer periphery of the cup body and covered around with the cup body cover.

## Description

### TECHNICAL FIELD

This invention relates to a squib to be installed in a gas generator or the like used in a safety device for a car such as an air bag and the like.
More particularly, this invention relates to a gas generator with such a squib installed therein for an air bag, and a gas generator with the squib for a seat belt pretensioner.

### BACKGROUND ART

A variety of electric squibs have been developed as squibs for gas generators for inflating air bags equipped in cars.
Such a squib usually has metal pins for electrically connecting to the external, and an ignition device (heating element) at the other ends of the metal pins for igniting an explosive.

As such a heating element, various sorts like a so-called bridging wire, a so-called semiconductor bridge produced by using a semiconductor technique such as vapor deposition, and a so-called thick film bridge, wherein a resistance film is formed directly on a circuit substrate by a technique such as plating, are known.
Particularly, the semiconductor bridge has an advantage in that it can reduce the heat capacity so as to have quick responsivity by utilizing a thin film bridge with a thickness of a few microns.

In a gas generator (inflator), an explosive in a squib is ignited first, then the resultant heat energy burns an enhancer, and the resultant flame and thermal particles burn a gas generating agent to thereby generate a gas for inflating an air bag.

In order to conduct this series of combustion steps smoothly, the squib needs to efficiently and stably transfer fire to the explosive (enhancer) to be ignited.
However, since an existing squib has a structure in which a cup body explodes and the cup body opens like petals after the operation of the squib, it cannot converge a flame from the squib. Namely, it cannot make the flame from the squib have directivity.

For solving this problem, a squib having a cylindrical member called a charge holder loaded in the cup body, which makes a flame therefrom have directivity, is known (e.g. Patent Document 1).
Patent Document 1: Official Gazette of Japanese Patent Application Laid Open No. 1998-35,400

However, this type of squib has a fault in that the amount of an ignition powder filled in the cup body becomes small because the cylindrical member loaded into the cup body occupies a substantial portion of the space within the cup body.
In order to solve this fault, when a predetermined amount of the ignition powder is filled, there is no other choice but to lengthen the length of the squib. From the perspective of downsizing (thinning or shortening) an inflator, however, a squib with a short length is desired.

These days in particular, the amount of an ignition powder filled in a squib tends to be increased to effectively transfer fire from the squib to an enhancer, and a squib structured as described in the Patent Document 1 has a problem that the height of the squib becomes further higher.

Also, when the squib operates and the internal explosive is ignited, by the resultant pressure the cup body explodes along with a score provided on the top face of the cup body. Although the score is normally provided in a radial pattern from the center of the top face of the cup body, when the fracture develops to the peripheral portion and further to the side face of the cup body, it is feared that fractions as scattering substances jump out into the internal of a module depending on the degree of the fracture.
This tendency is concerned to be more significant when the amount of the ignition powder to be filled in the squib is increased for ignition efficiency.

### DISCLOSURE OF THE INVENTION

### TASK TO BE SOLVED BY THE INVENTION

The invention effectively solves the problems described above, and has an object to provide a squib, which improves directivity of the flame, suppresses occurrence of scattering substances resulting from explosion of a cup body, and further does not incur much increase in the length thereof even when the fill of ignition powder is increased. The invention also has an object to provide a gas generator for inflating air bag and a gas generator for seat belt pretensioner, which have the squib described above installed therein.

### SOLUTION FOR THE TASK

The inventors of the subject application have earnestly investigated to solve the problems described above and have obtained recognition that it is possible to not only improve directivity of the flame but also effectively prevent scattering substances resulting from the explosion of a cup body and further effectively suppress increase of the squib length resulting from increase of the fill of an ignition powder, by providing a metal cylindrical or ring restraining member in the outer periphery of the cup body for restraining the explosion of the cup body.
The invention takes its stand on the above recognition.

That is, therefore, the subject features of the invention to follow.
(1) A squib comprising a cup body, a cup body cover, and a header for holding a plurality of electrode pins insulated from one another and closing the opening portion of the cup body, wherein the internal of the cup body has an ignition powder, and a heating element connected to the electrode pins for igniting the ignition powder by externally applying electric current arranged in contact with the ignition powder, **characterized in that** a metal cylindrical or ring restraining member is provided in the outer periphery of the cup body and covered around with the cup body cover.

(2) A squib comprising a cup body, a cup body cover, and a header for holding a plurality of electrode pins insulated from one another and closing the opening portion of the cup body, wherein the internal of the cup body has an ignition powder, and a heating element connected to the electrode pins for igniting the ignition powder by externally applying electric current arranged in contact with the ignition powder,
**characterized in that** a metal cylindrical or ring restraining member is provided in the outer periphery of the cup body cover.

(3) In the (1) or (2) described above, the squib **characterized in that** the cylindrical head portion of the cylindrical restraining member projects from the top face of the cup body.

(4) In the (3) described above, the squib **characterized in that** the cylindrical head portion of the cylindrical restraining member is wrung inwardly.

(5) In the (1) or (2) described above, the squib **characterized in that** the cup body and the cylindrical restraining member are integrally structured by folding the side face of the cup body outwardly.

(6) In any one of the (1) to (5) described above, the squib **characterized in that** a flange is provided in the lower end portion of the cylindrical restraining member.

(7) A gas generator for inflating air bag using the squib described in any one of the (1) to (6) described above.

(8) A gas generator for seat belt pretensioner using the squib described in any one of the (1) to (6) described above.

### BRIEF DESCRIPTION OF THE DRAWINGS

Figure 1 is a sectional view of a squib according to the invention;
Figure 2 is a view comparatively showing states of squibs after operation according to the prior art and the invention;
Figure 3 is a sectional view showing another example of a squib according to the invention and a view showing its state after operation;
Figure 4 is a sectional view showing another example of a squib according to the invention;
Figure 5 is a sectional view showing another example of a squib according to the invention;
Figure 6 is a sectional view showing another example of a squib according to the invention;
Figure 7 is a sectional view showing another example of a squib according to the invention;
Figure 8 is a sectional view showing another example of a squib according to the invention;
Figure 9 is a sectional view showing another example of a squib according to the invention;
Figure 10 is a conceptual view of a gas generator for inflating air bag; and
Figure 11 is a conceptual view of a gas generator for seat belt pretensioner.

### DESCRIPTION OF THE REFERENCE NUMERALS

- 1: Cup body
- 2: Cup body cover
- 3: Heating element
- 4: Header
- 5: Electrode pin
- 6: Glass hermetic seal
- 7,: 7-1 Cylindrical restraining member
- 7-2: Ring restraining member
- 8: Ignition powder
- 9: Mold
- 10: Petal
- 11: Flange
- 21: Gas generator for inflating air bag
- 22: Squib
- 23: Enhancer
- 24: Gas generating agent
- 25: Filter
- 26: Outer case
- 27: Hole
- 31: Gas generator for seat belt pretensioner (micro gas generator)
- 32: Squib
- 33: Gas generating agent
- 34: Base (holder)
- 35: Cup body
- 36: Welded portion

### BEST MODE FOR CARRYING OUT THE INVENTION

The invention will then be specifically explained.

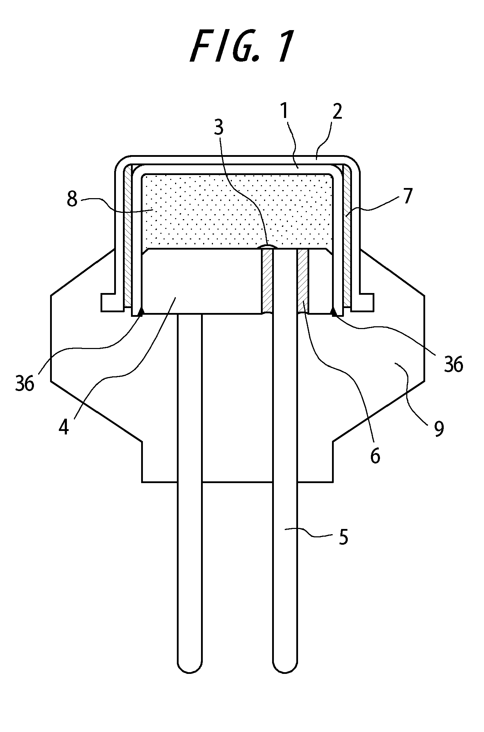

Figure 1 shows one example of a squib according to the invention in section.
In the drawing, reference numerals 1, 2, 3 and 4 denote a cup body, a cup body cover, a heating element and a header, respectively, and in the header 4, an electrode pin 5 for electrically connecting to the external is fixed with a glass hermetic seal 6. By fixing the electrode pin 5 with the glass hermetic seal 6 as such, it is possible to ensure electrical insulation with high airtightness maintained. Moreover, the electrode pin 5 is connected to the heating element 3 in the internal of the squib to conduct electric current from the external to the heating element 3.
In addition, it is advantageous for the cup body 1 and the header 4 that the boundary potions of the header 4 and the cup body 1 are integrated by means such as laser welding for example, to form the welded portion represented as numeral 36 to thereby seal up the internal of the cup body under high airtightness.

Reference numeral 7 indicates a cylindrical restraining member made of metal, and the structure is that the metal cylindrical member 7 is arranged in the outer periphery of the cup body 1 and its periphery is covered with the cup body cover 2. Numeral 8 is an ignition powder and numeral 9 is a mold for covering and fixing the joining portion of the cup body 1 and the header 4.

By having the structure shown in Figure 1, it is possible to improve the directivity of the flame and reduce the generated amount of scattering substances resulting from an explosion of the cup body as the invention desires.

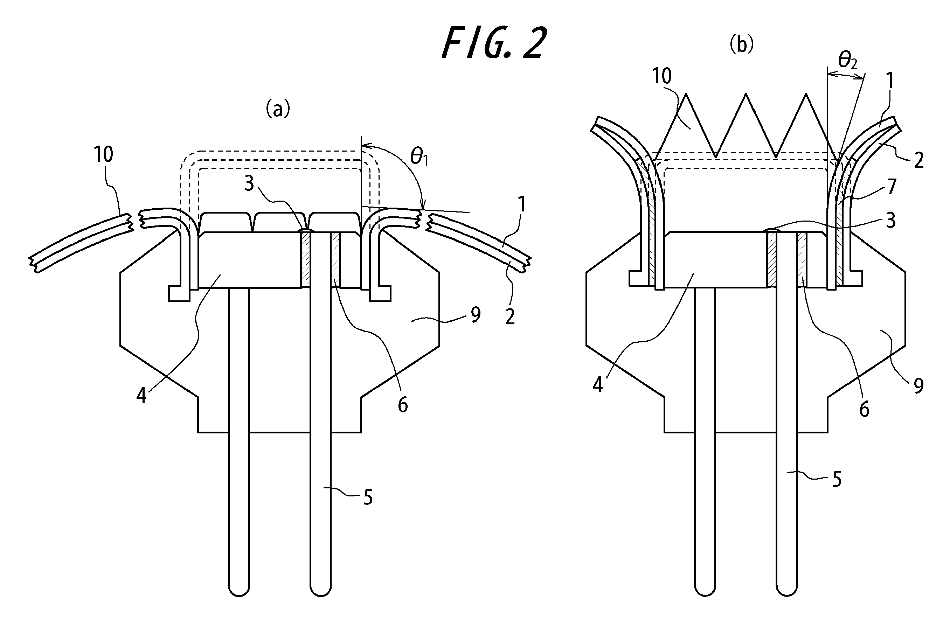

In Figure 2(a) and (b), the states of squibs after operation according to the prior art and the invention are comparatively shown, respectively.
As shown in Figure 2(a), in the squib according to the prior art, since the cup body 1 (and the cup body cover 2 similarly) opens like a petal 10 when the cup body 1 is fractured, the flame from the squib peripherally diffuses and its diffusion angle is thought to be substantially equal to the opening degree θ ₁ in the state of opened petal, which is substantially large as about 90 to 110°. More specifically, the flame cannot be converged effectively, and its directivity is low.

On the other hand, in the squib according to the invention, wherein the cylindrical restraining member 7 is arranged in the outer periphery of the cup body 1, the flame is diffused along with the inner periphery of the cylindrical restraining member 7 when the squib is operated, and the diffusion angle θ ₂ of the flame is about 0 to 20° in the opening degree of petal, which is smaller than the squib of the art. More specifically, the flame can be converged effectively to thereby improve its directivity.

Also, while in the squib according to the prior art, it is feared that fractions as scattering substances jump out into the internal of the module when the explosion of the cup body develops to the peripheral portion and particularly to the side face, in the squib according to the invention, wherein the cylindrical restraining member 7 is arranged in the outer peripheral of the cup body, the explosion of the cup body develops only to the top face of the cup body and not to the side face so that the occurrence of scattering substances is substantially reduced as compared to the squib of the prior art.

As described above, in the squib according to the invention, it is possible to improve the directivity of the flame to concentrate the heat of the flame in one direction. Seen from the side of explosives, which the fire is transferred to, the enhancer for example, the fire is transferred from the one concentrated point to the enhancer to improve the efficiency of the fire transfer and obtain the same fire transferability with the mount of ignition powder smaller than the amount normally filled in the squib.

Therefore, when the fire transferability only needs to be equal to the prior art, the fill of the ignition powder can be reduced to downsize the squib.
Moreover, when the amount of the ignition powder equal to the prior art is filled, fire transferability to the enhancer can be improved.
Furthermore, even when the amount of ignition powder is ever-increased to further improve the fire transferability, since all of the space in the cup body can be applied to the fill of the ignition powder, filling the sufficient amount of the ignition powder does not make the length of the squib much longer.
On this point, in a squib wherein a restraining member is provided in the internal of a cup, when the sufficient amount of ignition powder is filled, the squib becomes longer and larger by necessity as described above.

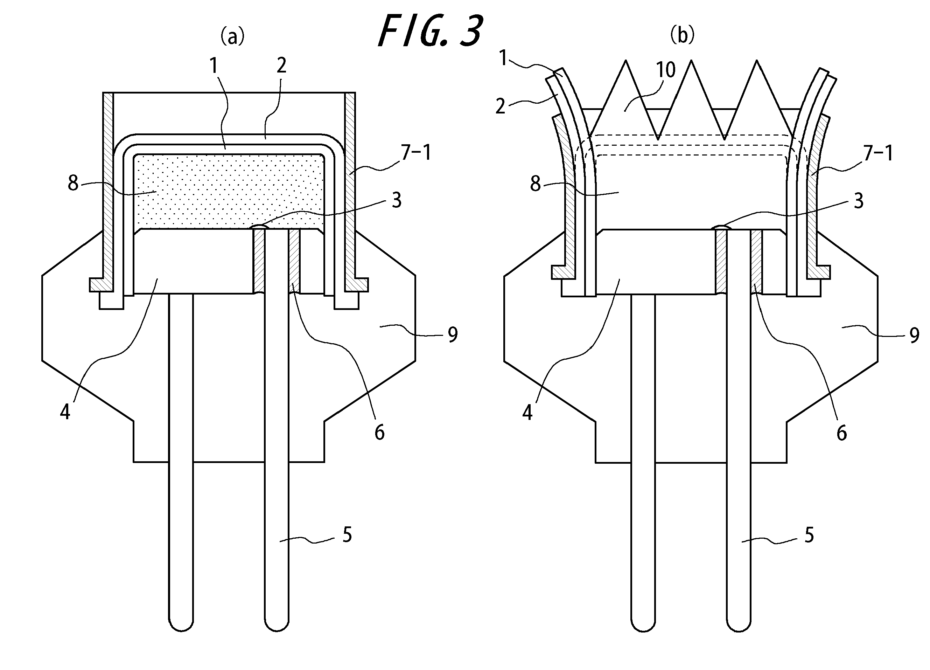

Although the typical structure of the squib according to the invention has been explained above, the squib according to the invention is not limited to this but has variety.
The variety will be explained with reference to Figures 3 to 9 below.

Figure 3(a) is the case of that a cylindrical restraining member 7-1 is provided in the outer periphery of the cup body cover 2 and the cylindrical head portion of the restraining member 7-1 projects from the top face of the cup body cover 2.
In Figure 3(b), the operating state is shown. In this case, the length of the cylindrical restraining member 7-1 is longer to further improve directivity of the flame.
Also in this case, the generated amount of scattering substances resulting from explosion of the cup body can be further reduced. It is because a fear of the fracture is small, since the explosion of the cup body, which mainly occurs in the R portion of the cup body, does not bend the R portion reversely when the length of the cylindrical restraining member 7-1 is long beyond the top face of the cup body cover 2.

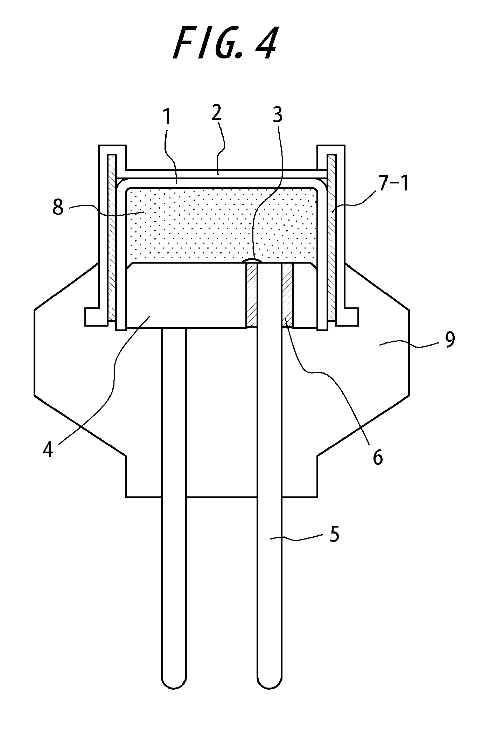

Figure 4 is the case that the cylindrical restraining member 7-1 having the cylindrical head portion projecting from the top face of the cup body 1 is provided in the outer periphery of the cup body 1 and its periphery is covered with the cup body cover 2.
In this case, as similar to the case of Figure 3, the length of the cylindrical restraining member 7-1 is longer to further improve the directivity of the flame, and also to further reduce the generated amount of scattering substances resulting from the explosion of the cup body 1.

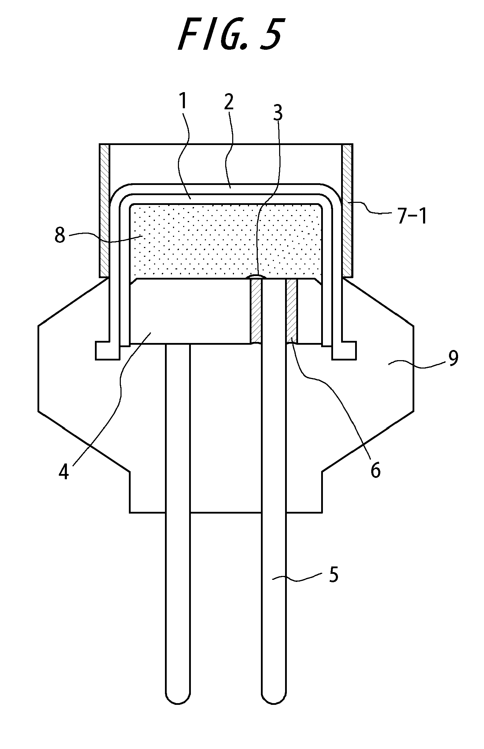

Figure 5 is the case that the cylindrical restraining member 7-1 is provided with the cylindrical head portion projecting from the top face of the cup body 1 in the outer periphery of the cup body cover 2 similarly to the case of Figure 3, but the side face area of the cup body cover 2 to be restrained is limited to the exposed portion.
In this case, it is possible to not only achieve the improvement of the directivity of the flame and reduction of the generated amount scattering substances similarly to the case of Figure 3, but also save materials by limiting the area to be restrained to the exposed portion of the cup body cover 2. Also in this case, a squib is produced according to an ordinary method and the cylindrical restraining member 7-1 is implanted in the outer periphery of the cup body cover 2 to complete. Therefore, an advantage is that it can be applied to the existing squib.

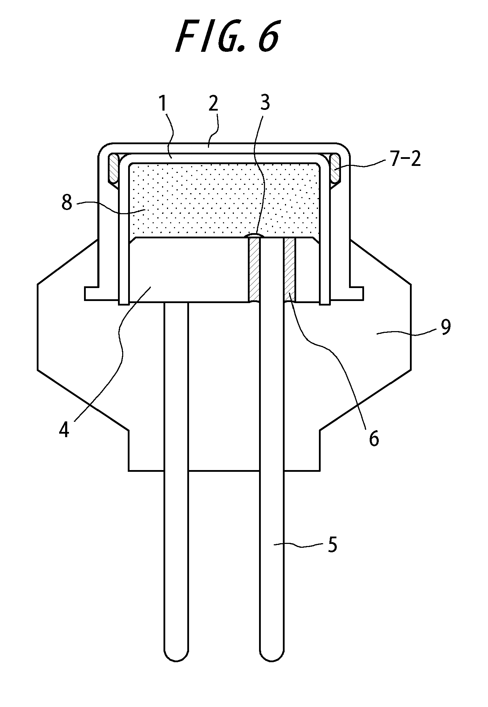

Figure 6 is the case that the ring restraining member 7-2 is arranged only in the vicinity of the R portion in the outer periphery of the cup body 1 and the periphery of the cup body 1 including the ring restraining member 7-2 is covered with the cup body cover 2.
Since the explosion of the cup body tends to occur in the R portion as described in the explanation on Figure 3, the explosion of the cup body can also be prevented effectively by restraining only the vicinity of the R portion. It also contributes to saving of materials for the restraining member.

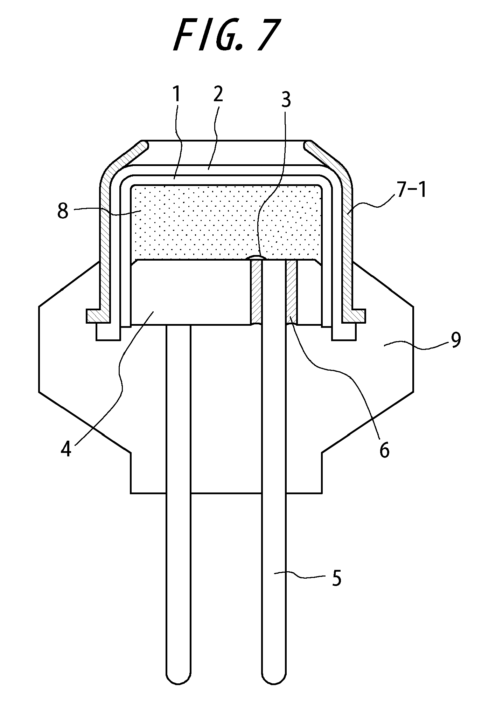

Figure 7 is the one structured that the cylindrical head portion of the cylindrical restraining member 7-1 arranged as Figure 3 is wrung inwardly.
As such, by wringing the cylindrical head portion inwardly, it is possible to further improve the directivity of the flame. The generated amount of scattering substances can also be further reduced.

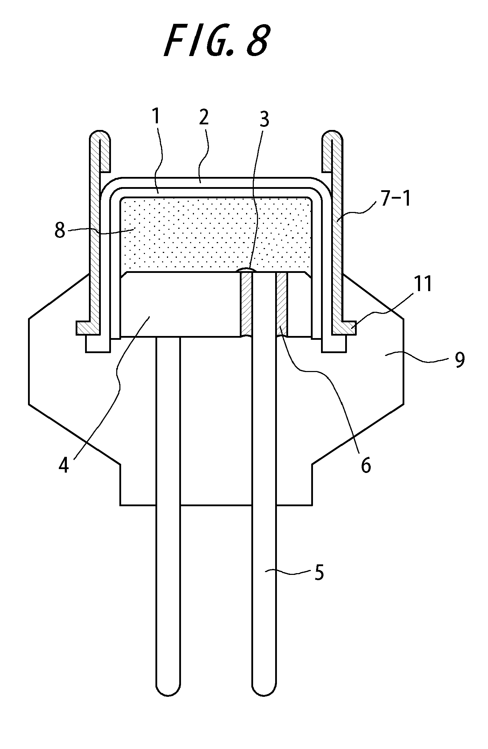

Figure 8 is the one that the cylindrical head portion of the cylindrical restraining member 7-1 projecting from the top face of the cup body cover 2 is folded inwardly to double-structure the restraining member in the projecting area.
With such a structure, the wall thickness of the folded portion becomes twice as thick as the case of not folding to improve the strength of the peripheral portion. Since there are many cases in the destruction of the cylindrical restraining member that the fracture develops as being torn by stress posed on the peripheral portion, the tearing destruction can be prevented by thickening the peripheral portion to prevent a chap and an advantage is that the sufficient strength can be obtained even when the thickness of the cylindrical retraining member 7 is made thinner.

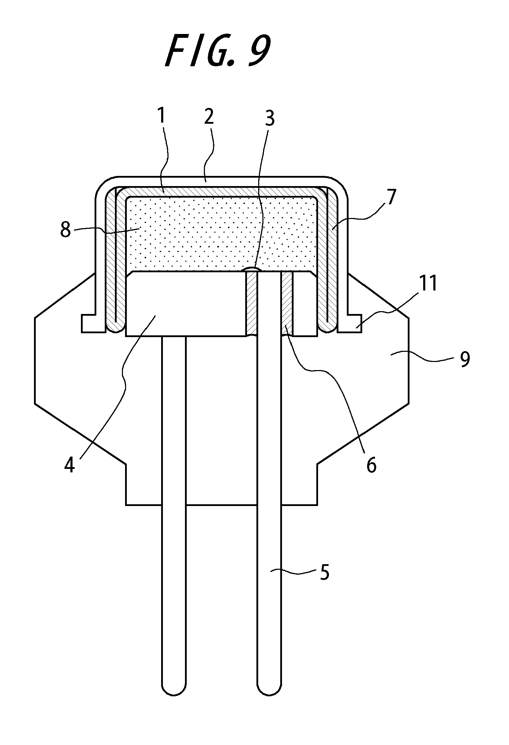

Figure 9 is the one that the side face of the cup body is folded outwardly to integrally structure the cup body and the cylindrical restraining member.
An advantage of such a structure is that since the cup and the cylindrical restraining member are integrated, it is possible to mount the cup and the cylindrical restraining member on the squib by one step in assembly. Also, since the cylindrical restraining member is welded at the same time when the cup is welded to a header, the cylindrical restraining member can be fixed more solidly so as to certainly prevent the fallout due to impact or pressure during operation.

Moreover, in the invention, it is advantageous to provide a flange 11 in the lower end portion of the cylindrical restraining member 7-1 as shown in Figures 3, 7 and 8.
By providing such a flange in the lower end portion of the cylindrical restraining member, the cylindrical restraining member 7-1 hooks into a mold at the portion of the flange 11 with the impact during the operation to reduce a risk of falling out due to the impact, pressure or the like during the operation.

In the invention, although a material of the cylindrical or ring restraining member is not limited but a variety of materials can be used, steel and stainless in particular are advantageously suitable. The thickness of the metal restraining member may be a thickness with which the side face of the cup body is not damaged by the operation of the squib and it is preferably about 0.2 to 1.0 mm.

Also in the invention, the ignition powder is preferable to contain zirconium in the composition. Alternatively, the one containing titanium hydride, boron, tricinate, or the like is advantageously suitable. Moreover, as the material of the cup body cover, resin such as Teflon (registered trademark) and nylon is advantageously suitable. Furthermore, in the invention, as a heating element, a typical SCB tip is needless to say, any heating elements in common knowledge of a person skilled in the art can be used.

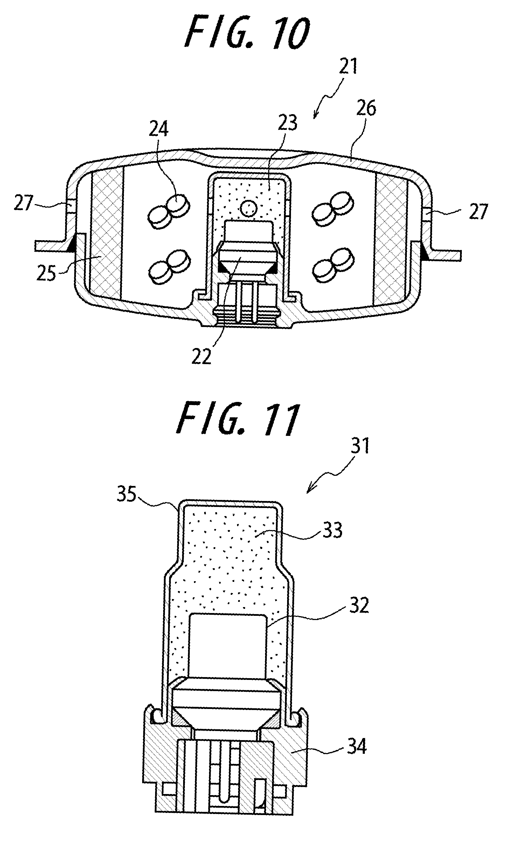

Next, a gas generator for inflating air bag using the squib of the invention will be described. In Figure 10, a conceptual view of a gas generator for inflating air bag is shown. As shown in the figure, a gas generator for inflating air bag 21 has a squib 22, an enhancer 23, a gas generating agent 24, and a filter 25 in the internal, and the external is composed of an outer case 26 resistant to firing pressure of the gas generating agent 24. The outer case 26 has a hole 27 made for discharging the generated gas to the air bag side.
When the squib 22 operates, the heat energy generated from the squib 22 burns the enhancer 23 to generate a flame and thermal particles. The flame and thermal particles burn the gas generating agent 24 to generate a gas for inflating an air bag. When the gas is discharged from the hole 27 made in the outer case 26 to the outside, by passing through the filter 25, the gas itself is cooled at the same time with that a residue of the burnt gas generating agent is collected.

Further, a gas generator for seat belt pretensioner using the squib of the invention will be described.
In Figure 11, a conceptual view of a seat belt pretensioner (micro gas generator) is shown. As shown in the figure, a micro gas generator 31 has a squib 32 and a gas generating agent 33 in the internal, and the squib 32 is fixed to a base 34 called holder. Additionally a cup body 35 storing the gas generating agent 33 is structured to be fixed to the holder by a swaging tool. When the squib 32 operates, a flame and thermal particles from the squib 32 burn the gas generating agent 33 in the cup body 35 to generate a gas.

### INDUSTRIAL APPLICABILITY

According to the invention, it is possible to effectively suppress the occurrence of scattering substances resulting from an explosion of the cup body. More specifically, although the fracture occurred from the score portion of the top face of the cup body develops as the cup body is opened, since the fracture does not develop beyond the portion restrained by the cylindrical body or the ring after reaching it, there is no fear that fractions are generated.
Particularly in the case of a micro gas generator for seat belt pretensioner, when a squib operates and a gas generating agent is ignited, the cup of the micro gas generator opens to generate a gas. On this occasion, it is feared that fractions scatter from the squib into a pretensioner module because the structure normally does not have a filter. However, according to the invention, the opening of the cup body can be controlled by the restraining member to suppress the development of the fracture in the opening portion of the cup body without a fear that the fractions scatter, to thereby more certainly operate the module.

Moreover, according to the invention, since the side face of the cup body is held by the cylindrical body or the ring without being fractured, it is possible to make the flame have the directivity resulting in concentrating the heat of the flame to one point. At the same time, it is possible to certainly and stably transfer fire so as to shorten and stabilize the time from conducting current to the squib to the start of operating the module.
Seen from the perspective of an explosive to which the fire is transferred, this phenomenon means that the fire is transferred to the explosive from the concentrated one point so that the efficiency of the fire transfer is improved and the same fire transferability can be obtained with the amount of ignition powder smaller than the amount normally filled in the squib.

Furthermore, according to the invention, since sufficient space in the cup body can be applied to fill the ignition powder, it is possible to suppress the entire length of the squib to relatively short even when the filling amount of ignition powder is ever-increased to further improve the fire transferability.

## Claims

1. A squib comprising a cup body, a cup body cover, and a header for holding a plurality of electrode pins insulated from one another and closing the opening portion of the cup body, wherein the internal of the cup body has an ignition powder, and a heating element connected to the electrode pins for igniting the ignition powder by externally applying electric current arranged in contact with the ignition powder,
**characterized in that** a metal cylindrical or ring restraining member is provided in the outer periphery of the cup body and covered around with the cup body cover.

2. A squib comprising a cup body, a cup body cover, and a header for holding a plurality of electrode pins insulated from one another and closing the opening portion of the cup body, wherein the internal of the cup body has an ignition powder, and a heating element connected to the electrode pins for igniting the ignition powder by externally applying electric current arranged in contact with the ignition powder,
**characterized in that** a metal cylindrical or ring restraining member is provided in the outer periphery of the cup body cover.

3. The squib as claimed in claim 1 or 2, **characterized in that** the cylindrical head portion of the cylindrical restraining member projects from the top face of the cup body.

4. The squib as claimed in claim 3, **characterized in that** the cylindrical head portion of the cylindrical restraining member is wrung inwardly.

5. The squib as claimed in claim 1 or 2, **characterized in that** the cup body and the cylindrical restraining member are integrally structured by folding the side face of the cup body outwardly.

6. The squib as claimed in any one of claims 1 to 5, **characterized in that** a flange is provided in the lower end portion of the cylindrical restraining member.

7. A gas generator for inflating air bag using the squib as claimed in any one of claims 1 to 6.

8. A gas generator for seat belt pretensioner using the squib as claimed in any one of claims 1 to 6.
